# EUROPEAN PATENT APPLICATION

(11) **EP 1 237 131 A2**
(43) Date of publication of application: **04.09.2002**
(21) Application number: 02003562.2
(22) Date of filing: 15.02.2002
(51) Int. Cl.: G07F 19/00, G06F 17/60

(54) **A wireless universal personal access system**

(30) Priority: 15.02.2001 US 784526
(71) Applicant: TRW Inc., Redondo Beach, California 90278 (US)
(72) Inventor: Shreve, Gregory A., San Pedro, CA 90732 (US); Dunbridge, Barry, Torrance, California 90505 (US)
(74) Representative: Schmidt, Steffen J., Dipl.-Ing.

(57) **Abstract**

The invention relates to a two-way bi-directional wireless-based access communication system that allows a user to access any one of multiple independent secured domain systems from a single handheld remote keyless entry device, whereupon activation of the remote keyless device by the user, an encoded request signal containing a predetermined access code is generated and transmitted by the remote keyless entry device to one of the multiple secure domain systems. And, based on the access code contained within the encoded request signal, the domain system determines the validity of the access code and transmits a corresponding encoded authorization signal to user at the transceiver device.

## Description

### BACKGROUND OF THE INVENTION

### 1. Field of the Invention

The present invention relates generally to a communication system and, more specifically to a long range, interactive and wireless personal access communication system that, using a single two-way remote keyless entry-based interactive wireless device, facilitates transactions between a user and any one of several independent secure domain systems.

### 2. Description of the Prior Art

Increasingly, a majority of individuals are faced with having to access many different secured domain systems, each having its own unique security access requirements. And as the number of such systems increases, so too increase the number of access codes, access devices and the like for which an individual must be accountable. For example, a consumer wanting to withdraw money from an automated teller machine (ATM) is currently required to swipe a magnetically striped bank card across a card reader and manually input his or her personal identification number (PIN). Similarly, in many building access systems, an individual is required to swipe a badge across a card reader and/or manually enter his or her own personal access code into a keypad. Moreover, approximately 10 to 20 million automobile owners currently use remote keyless entry (RKE) systems (see U.S. Patent Nos., 5,896, 094, 5,499, 022 and 5,844,517) to turn on or off the automotive security systems of their vehicles. And with the advent of smart cards, a consumer wanting to perform a point of sale transaction using an automated payment system like those popularized by the Mobile Speedpass™ system and the EZ Pass™ toll-collection system, must pay from a prepaid account that is linked to a card, or to a decal that is mounted on the windshield of the an automobile. Likewise, with such smart badge systems such as IBM's IBM PAN™ (personal access network) system and Hewett Packard's™ smart badge system, a card or decal is embedded with a chip containing an individual's account information. And a terminal located at a transaction site utilizes a card reader or emits a radio signal that reads the account information contained within the smart badge chip. Various other access methods known in the art include, biometrics (e.g. fingerprint, voiceprint, retina, face recognition, skin temperature sensing, body measurement, dynamic signatures), bar codes, conventional keys, forensics, one-wire buttons, radio frequency (RF) identification.

Unfortunately, because each of the systems mentioned above exists independently of each other system, an individual must conduct transactions with each of the systems using a variety of access platforms. The invention embodied in Patent Nos. 5,982,891; 5,949,876; 5,917,912; 5,915,019; 5,910,987; and 5,892,900 seeks to overcome this disadvantage by disclosing a capability to conduct secure transactions from one remote location, such as a secure computer. However, the invention does not provide a convenient enabling device that an individual could carry to provide the security access codes and identification procedures necessary to conduct remote transactions with many different secure systems.

Therefore, based on techniques known in the art for accessing secured domain systems, a universal personal access system having the capability to utilize an enabling device, such as a remote keyless entry (RKE) fob device already carried by a majority of individuals, to provide the security codes and identification procedures necessary to conduct secured transactions with many independent secured domain systems is highly desirable.

### SUMMARY OF THE INVENTION

The present invention provides an access communication system having a transceiver device for transmitting and receiving signals and an electronic database storage element for storing an access code that provides the necessary identification of a user. The transceiver device is responsive to activation by the user, whereupon a coded request signal containing the predetermined access code is generated and transmitted by the remote keyless entry transceiver device to any one of many secured domain systems. The secured domain systems, each being remote from the transceiver device and independent from each other secure domain system, each have a base unit and service provider for receiving the digitally encoded request signals from the remote keyless entry transceiver device and transmitting a digitally encoded authorization signal to the remote keyless entry transceiver device in response to the receipt of the appropriate encoded request signal.

### BRIEF DESCRIPTION OF THE DRAWINGS

Reference is now made to the following description and attached drawings, wherein:
FIG. 1 is a block diagram illustration of a remote keyless entry based wireless universal access system in accordance with a preferred embodiment of the present invention;
FIG. 2a is a functional illustration of a remote authentication server configuration between a two-way remote keyless entry device and a domain system service provider in accordance with an alternate embodiment of the present invention;
FIG. 2b is a functional illustration of a hybrid authentication server configuration between a two-way remote keyless entry device and a domain system service provider in accordance with an alternate embodiment of the present invention;
FIG. 2c is a functional illustration of a standalone authenticator in accordance with an alternate embodiment of the present invention;
FIG. 3a is a functional illustration of a remote keyless entry device in accordance with a preferred embodiment of the present invention;
FIG. 3b is a front view illustration of a remote keyless entry device in accordance with the remote keyless entry device of FIG. 3a;
FIG. 3c is a front view illustration of a remote keyless entry device including an intelligent control button in accordance with an alternate embodiment of the present invention;
FIG. 3d is a side view illustration of the remote keyless entry device of FIG. 3c;
FIG. 3e is a front view illustration of the remote keyless entry device of FIG. 3b including a modular removable microdisplay;
FIG. 3f is a front view illustration of a remote keyless entry device without an internal display, but including a modular removable microdisplay in accordance with an alternate embodiment of the present invention;
FIG. 3g is a front view illustration of the remote keyless entry device of FIG. 3f with the modular removable microdisplay removed;
FIG. 3h is a side view illustration of a remote keyless entry device including a modular removable microdisplay that includes a microdisplay screen and lens for magnifying the view the microdisplay screen view in accordance with an alternate embodiment of the present invention;
FIG. 4a is a side view illustration of remote keyless entry device including a button control interface;
FIG. 4b is a side view illustration of a remote keyless entry device including a skin conduction sensing interface in accordance with an alternate embodiment of the present invention;
FIG. 4c is a back view illustration of the remote keyless entry device of FIG. 4b;
FIG. 4d is a schematic illustration of the skin conduction interface of FIG. 4b;
FIG. 4e is a side view illustration of a remote keyless entry device including an electrode for contact transactions in accordance with an alternate embodiment of the present invention;
FIG. 4f is a back view illustration of the remote keyless entry device of FIG. 4e;
FIG. 4g is a back view illustration of the remote keyless entry device of the present invention including an input/output (I/O) port for providing a physical connection to a domain system;
FIG. 4h is a functional illustration of the physical connection between the remote keyless entry device of FIG. 4g and a domain system;
FIG. 5a is a side view illustration of a remote keyless entry device of the present invention including a biometric sensor attachment;
FIG. 5b is a back view illustration of the remote keyless entry device of FIG. 5a with the biometric sensor attachment removed from an electrical connector and mechanical attachment socket of the remote keyless entry device;
FIG. 5c is a side view illustration of the biometric sensor attachment of FIG. 5a; and
FIG. 5d is a back view illustration of the biometric sensor attachment of FIGs. 5a and 5c including an active area for extracting sensor data.

### DETAILED DESCRIPTION OF THE INVENTION

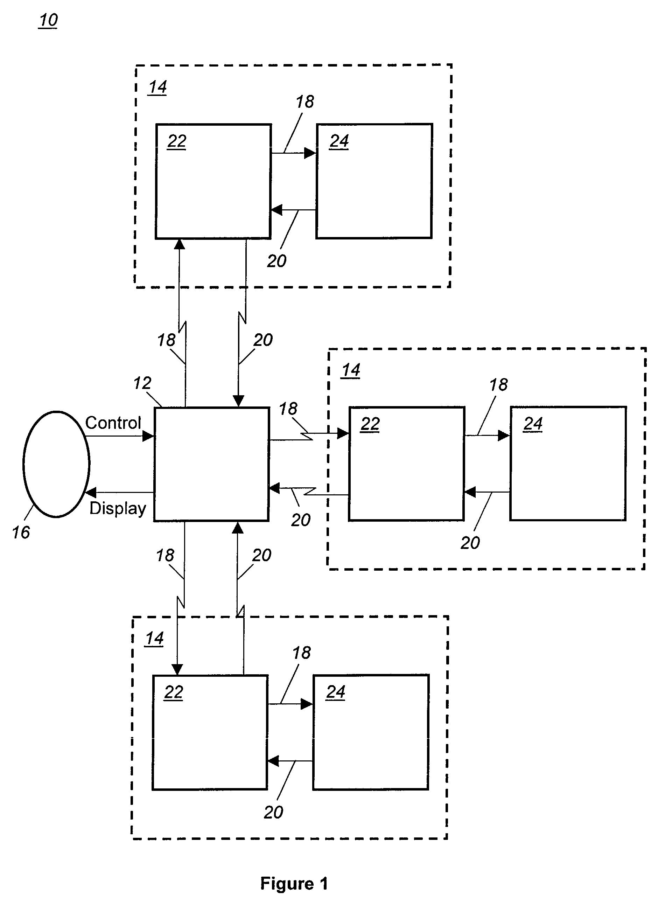

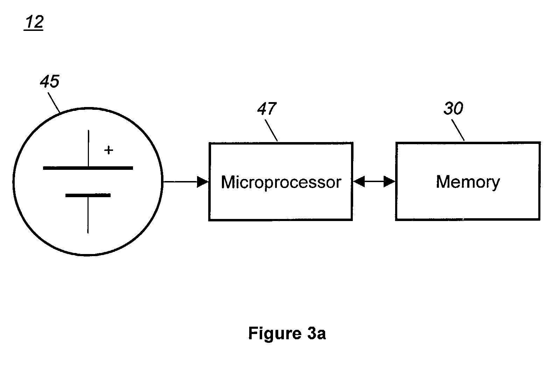

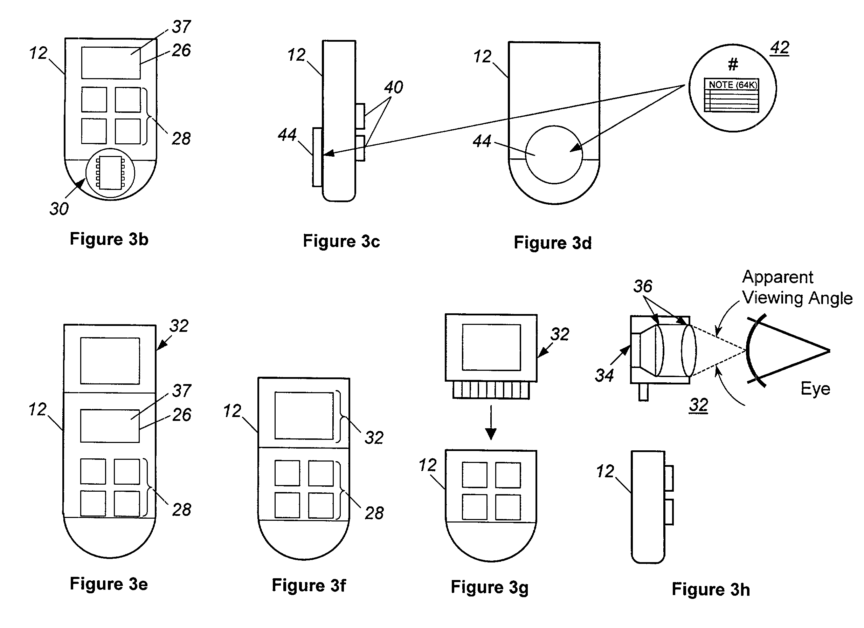

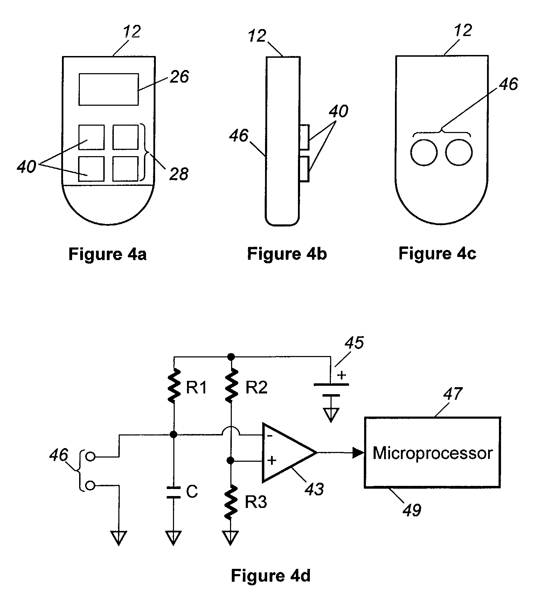

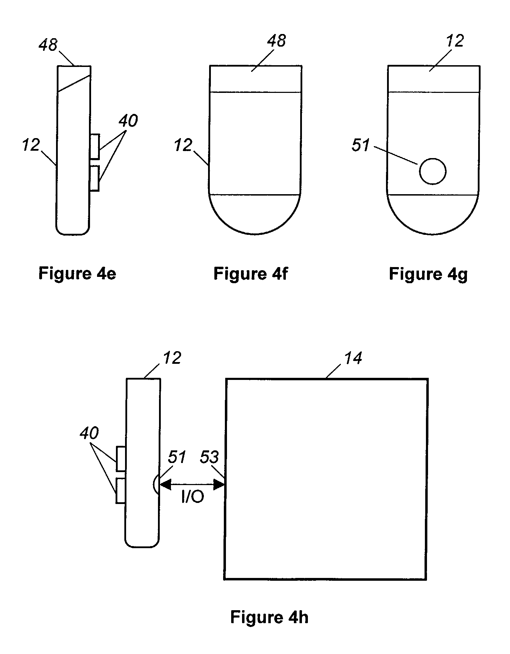

Referring to FIG. 1, the present invention discloses a remote keyless entry (RKE) based, wireless access system 10 that allows a user to independently access any one of a variety of independent secured systems from a single universal platform. To accomplish this, the system 10 includes a single transceiver device 12, preferably, but not necessarily, a remote keyless entry-based transceiver device, that is capable of performing two-way bi-directional wireless data communication with any one of a plurality of independent secure electronic domain systems 14. More particularly, specific digitally encoded pulse command signals (18, 20) are continuously and securely transmitted and received between the transceiver device 12 and a particular domain system 14 until a transaction between the two is complete. Typically, a user 16 initiates the transaction with the particular domain system 14 by activating the transceiver fob device 12 using the interface methods described and illustrated in FIGs. 3 and 4. Upon activation, the transceiver device 12 digitally encodes a request signal 18 with certain access code information, described below, and transmits the request signal 18 to the domain system 14. The domain system 14 may respond to the user's request 18 in a variety of ways, for example, the domain system 14 may send an authorization signal 20 to the transceiver device 12 notifying the user 16 that access has been granted or denied. Alternatively, the domain system 14 may send an authorization signal 20 to the transceiver device 12 requesting additional information from the user 16. In this case, either the user 16 will activate the fob device 12 to send subsequent request signals 18 containing the information requested by the domain system 14 or the fob device 12 will, itself, automatically send the information.

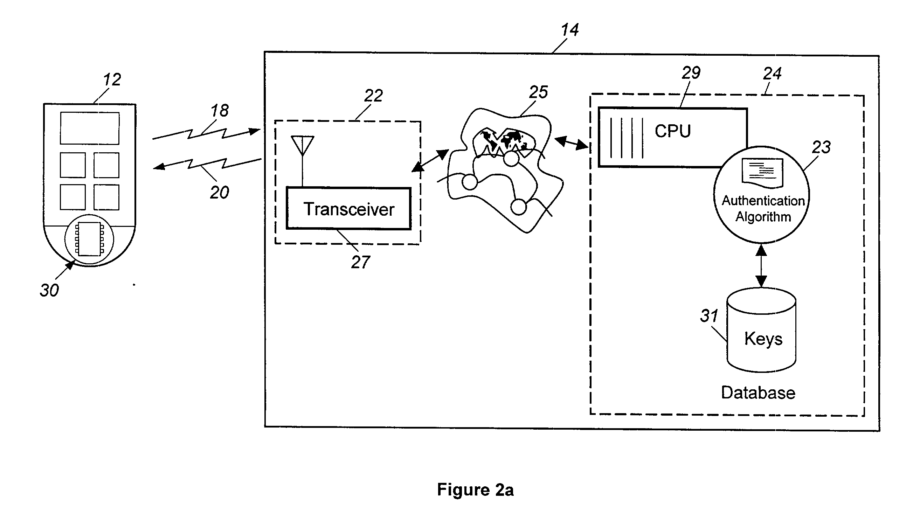

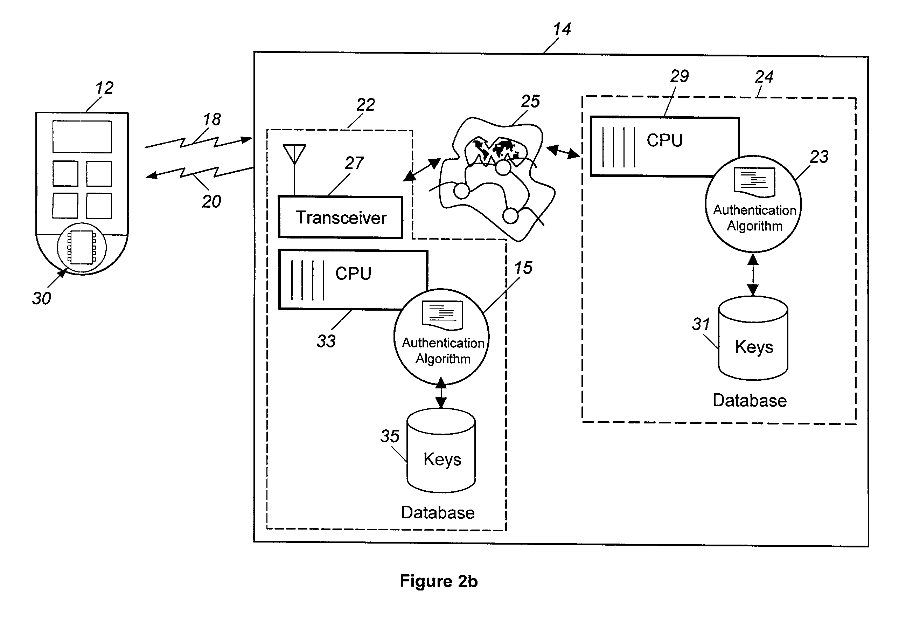

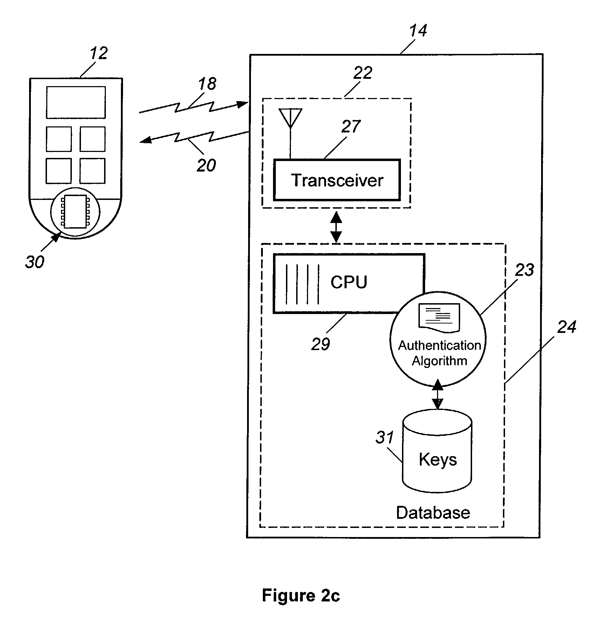

As noted above, the transceiver device 12 sends a digitally encoded request signal 18 to the domain system 14 either upon initial activation by the user 16 or automatically. As illustrate in detail in FIG. 2, each domain system 14 preferably includes a base unit 22 and a service provider 24 that may be either directly or remotely connected to each other. Communication between the RKE fob device 12 and the domain system 14 is established once the base unit 22 receives the encoded request signal 18 from the fob device 12. The base unit 22 forwards the request signal 18 to the service provider 24, and the service provider 24, acting as an issuing authority, determines whether to authorize the user's request and generates an authorization signal 20 corresponding thereto. The service provider 24 then sends the authorization signal 20 to the base unit 22 where the base unit 22 forwards the authorization signal 20 to the user's RKE fob device 12.

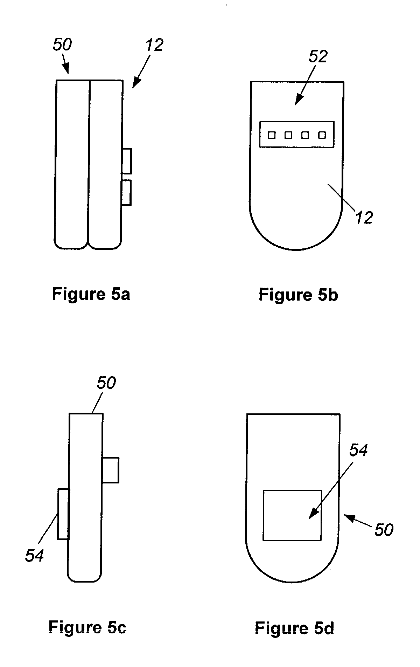

The digitally encoded request signals 18 transmitted by the device 12 to the base unit 22 may be encoded with access codes such as a user identification (ID) code, a user account number, a personal identification number, a written signature recorded from a touch screen display, a personal biometric signature, voice authentication information, or other personal information such as a mother's maiden name. An advantage of the present invention is that all access codes can be converged into the single RKE fob device 12 by storing the codes in a secure electronic memory element 30 (see FIG. 3a) of the device 12. And, as a result of having all of the user's 16 access codes stored in the device memory element 30, the present invention is able to provide multiple layers of security for transactions between the user 16 and the domain system 14. In other words, the more value that is attached to a particular transaction, the more levels of security the user 16 may be required to provide to complete the transaction. So, for example, level one security may require a user ID or a user account number, level two security may require a personal identification number (PIN), level three security may require personal information such as mother's maiden name, and level four security may require a biometric signature. For example, as shown in FIG 5., biometric-based security levels may be implemented using a detachable biometric sensor device 50. As illustrated in FIGs. 5a and 5b, in side and back views respectively, the biometeric sensor device 50 may attach to an electrical connector and mechanical socket 52 located at the back-side of the fob device 12. As illustrated in FIGs. 5c and 5b, in side and back views respectively, the biometric sensor device 50 includes an active region 54 that is utilized to extract invariant features from the user 16, the combination of which is called the biometric signature. The biometric sensor device 50 may be selected having the capability to extract invariant such features from the user 16 as fingerprints, voice data, eye iris or retina data, handwritten signature and/or dynamic handwritten signature force measurements, optical imaging of the face or palm, or other similar features. Although it is preferable that the biometeric sensor device 50 be small enough to integrate mechanically with the fob device 12, this is not necessary requirement of the invention.

Referring now to FIG. 2, the base unit 22 and the service provider 24 of the domain system 14 may be directly or remotely connected, depending on the particular needs of the system 10. For example, FIG. 2a illustrates a remote authentication architecture, FIG. 2b illustrates a hybrid authentication architecture, and FIG. 2c illustrates a standalone authentication architecture. However, it is important to note that the present invention is not limited to the architectures illustrated in FIG. 2 and can accommodate any domain system 14 architecture so long as the domain system 14 is capable of processing a secure transaction request from an fob device 12.

Referring specifically to FIG. 2a, a remote authentication embodiment of the domain system 14 includes a base unit 22 that is located within range of the fob device 12 and is located remotely from the service provider 24. A data communication network 25 is also included in the domain system 14 that provides a communication link between the base unit 22 and service provider 24. The data communication network 25 may generally be any secure communication link maintained by the service provider 24 - for example, the Internet, a virtual private network (VPN), a telephone line a satellite link an optical fiber, or a microwave or laser link. In other words, the data communication network 25 may be any communication path connecting the location at which a transaction occurs, here the base unit 22, with a location(s) at which an authentication of the transaction occurs, here the service provider 24. The domain system 14 configuration illustrated in FIG. 2a is likely to be a typical domain system configuration since today many conventional service providers 24 - for example, ATM machines, credit card point of sale terminals, service providing public web kiosks or the like - already require such a configuration.

Referring still to FIG. 2a, because the base unit 22 does no data processing or encryption/decryption, at least for the purposes of the transaction itself, it may include a simple transceiver 27. The transceiver 27 provides the base unit 22 with the capability to convert the data signals (18, 20) sent between the key fob device 12 and the service provider 24 from a wireless medium that can be recognized by the fob device 12 to a medium that can be recognized by the service provider 24, and vice-versa. Additionally, the base unit 22 may include a computer (not shown) for managing the data communication to and from the data communication network 25.

The FIG. 2a service provider 24 preferably includes a central processing unit (CPU) 29 and a secured database 31. Moreover, to provide authentication of a transaction initiated by the fob device 12 at the base unit 22, an "authentication algorithm" 23 - for example, a software program or a hardware encryption chip - is executed within the CPU 29. The authentication algorithm 23 typically requires information from the user 16, as input by the user 16 to the fob device 12, as well as information from the database 31 to perform what are typically known complex mathematical encryption and decryption operations, such as those described in " Applied Cryptography," Bruce Schneier, 1996. In other words, the key fob device 12, or perhaps the user 16 of the device 12, has to be identified uniquely, typically via a key fob identification code (ID) that may be a large number stored in a nonvolatile memory 30 (see also FIG. 3a) of the fob device 12. In addition to the key fob ID, authentication algorithm 23 may require the fob device 12 to provide the service provider 24 with other user specific information. All of the information may be provided by the fob device 12 to the service provider 24 by way of the data signals (18, 20) sent between the fob device 12 and the base unit 22. Once provided to the authentication algorithm 23, the information may be combined, in an unambiguous way, with information already stored on the service provider database 31. For example, the encryption/decryption keys which, as previously mentioned are stored in the database 31, can be used in combination with the key fob ID to provide authentication for a particular transaction. The database 31 may also contain cross-references between the key fob ID and other user specific information (e.g., accounts, access privileges, biometrics, etc) that can be used by the authentication algorithm 23 to further facilitate the authentication process. Thus, as part of the execution of the authentication algorithm 23, the CPU 29 uses keys stored in the database 31, to decrypt and encrypt the various data signals (18, 20) transmitted between the fob device 12 and the service provider 24. Based on the results of the authentication process, the CPU 29 may also query and take responses from the database 31 to access certain customer information stored in the database 31.

Referring now to FIG. 2b, a hybrid authentication embodiment of the domain system 14 is illustrated having similar components and operation as the embodiment shown in FIG. 2a, except that here the base unit 22, in addition to having the transceiver 27, also includes an authentication algorithm 15 and a database 35. The CPU 33, the authentication algorithm 15 and the database 35 work together to provide the base unit 22 with some type of authentication, validation or other processing (not necessarily related to a specific user) which takes place at the site of the key fob device 12 transaction. In other words, for various reasons, such as a need to reduce bandwidth over the data communication network 25 or to perform a check that "any valid user" or particular user tier is involved in a transaction, the base unit 22 includes the CPU 33, the authentication algorithm 15, and the database 35 together may perform certain pre-processing on post-processing procedures on the information exchanged between the fob device 12 and the service 24 provider. However, it is important to note that in the present embodiment, user-specific authentication still takes place at the remotely located service provider 24 in the manner previously described and illustrated in FIG. 2a.

Referring now to FIG. 2c, a standalone authentication embodiment of the domain system 14 is illustrated in which, similar to the FIG. 2a and 2b embodiments, the base unit 22 is located within range of the fob device 12. However, unlike the FIG. 2a and FIG. 2b embodiments, the domain system 14 here is configured so that the base unit 22 and the service provider 24 are centrally located. Here, the base unit 22 is similar to the base unit shown in FIG. 2a, namely it includes a transceiver 27 that provides the base unit 22 with the capability to convert the data signals (18, 20) sent between the key fob device 12 and the service provider 37. Alternatively, the base unit 22 may also include its own CPU (not shown), authentication algorithm and database (not shown) in a configuration similar to the configuration illustrated in FIG. 2b.

Referring still to FIG. 2c, the service provider 24 includes a CPU 29, an authentication algorithm 23 and a database 31 that operate in a manner similar to that described by the FIG. 2a and 2b embodiments. The domain system 14 architecture of the present embodiment is preferred for conducting the short-range contact messaging transactions described in detail in FIGs. 4e and 4f. In such transactions, the nonvolatile memory 30 (see also FIG. 3a) of the fob device 12 stores encrypted information in a manner similar to that used with smart cards or similar devices. Thus, the CPU 29, the authentication algorithm 23 and the database 31 work together to process a transaction by crediting a monetary amount of an account located within the service provider database 31 and, correspondingly, debiting the same amount from an account located within the memory 30 of the key fob device 12. Moreover, if the same architecture were used as a physical access mechanism, such as that used for a door or a gate, it is possible that the service provider database 31 could also be configured to provide authentication for specific users 16.

Referring now to FIGs. 3a and 3b, a preferred embodiment of the key fob transceiver device 12 is described and illustrated. The fob device 12 is preferably a two-way handheld bi-directional remote keyless entry (RKE) fob device that, for the convenience of the user 16, can be physically attached to a key ring (not shown) or similar article, and stored in a pocket, purse or wallet. The fob device 12 includes a microprocessor element 47, the memory element 30, a display element 26 and a control interface 28, each facilitating a transaction between the user 16 and the secured domain system 14. The fob device 12 may also include a power source 45 (see FIG. 4d) that provides power supply to the fob device 12. The power source 45 is preferably an interchangeable and rechargeable battery that, for example, may be charged from a conventional base unit (not shown) whose external contacts make contact with the external contacts of the fob device 12 once the device 12 is placed in the base unit. The power source 45 may also be charged by using a known induction coil approach that allows the battery 45 to be charged without the use of external contacts on the device 12. Charging by an induction coil approach is accomplished by setting the fob device 12 in a charging base (not shown) having a primary coil with alternating current flowing through it.

The display 26 of the fob device 12 is preferably a liquid crystal display (LCD) with backlight. The display 26 may provide feedback capabilities to the user 16 that include, but are not limited to, whether a particular domain system 14 is available for access and, if so, whether such access has been granted or denied. The display 26 preferably includes an approximately 600 to 800 pixel high-resolution screen 37 whose resolution is substantially similar to present state of the art video cameras. Alternatively, the screen 37 may include a touch sensitive interface. The backlight of the display 26 may be provided using the Indiglo™ technology currently used in ultra low power wristwatches. And in addition to having the capability to display textual characters, the display 26 may also include the capability to display symbols that, for example, may indicate the operational mode of the fob device 12.

The memory element 30, preferably a non-volatile memory chip, is included in the key fob device 12 to allows for, among other things, rewritable and updatable access information to be input to the display 26 directly or through the control interface 28 and stored within the memory 30. The fob device memory 30 may also store a history of prior transactions. For example, a transaction history might include recent account balance information, latest medical record information, the levels of security required for particular transactions, access expiration information, or encrypted proof of a past transactions.

As shown in FIGs. 3c and 3d, in side and back views respectively, an intelligent button 42 can be used in addition to, or in place of the volatile memory 30. Intelligent buttons 42, like the iButton device manufactured by Dallas Semiconductor, are typically packaged processor and memory devices (chips) that carry information that can be used for remote authorization to gain access to a secured system. Thus, during a transaction, information stored in the intelligent button device 42 is transmitted to the domain system 14 into which access is desired. By providing the intelligent button 42 in addition to the device memory 30, the user 16 is given an additional means of identification that may be used to acquire access to a particular domain system 14. And by providing the intelligent button 42 as an interchangeable replacement for the device memory 30, the fob device 12 could function as it did with the device memory 30, so long as the intelligent button 42 is plugged into a device port 44. Here, the fob device 12 provides a more universal means of access for the user 16, since the user 16 can not only select from a variety of interchangeable intelligent buttons 42, but the intelligent button 42 can be shared among multiple fob devices 12.

Because the memory elements (30, 42) of fob device 12 may contain proprietary information, it is worth mentioning here what approaches might be taken to mitigate against a situation where the fob device 12 is lost or stolen. For example, prior to a loss, a domain system 14 may, on an ongoing basis, duplicate or backup the contents of the device memory 30 to a database contained within the domain system 14 each time the user 16 transacts with the domain system 14. Such backups can automatically occur depending upon such criteria as the time elapsed since the last transaction or the nature of the transaction itself. However, once a loss has occurred, the loss may be mitigated using the measures similar to those typically taken when an ATM card, credit card or similar item is lost or stolen. In other words, the user 16 would notify the appropriate domain system 14 administrator that the device 12 had been lost or stolen and the administrator would, in turn, invalidate any authorization requests that are associated with the access codes (keys) stored in the memory 30 of the lost or stolen fob device 12.

Referring now to FIGs. 3e through 3f, the RKE fob device 12 may alternatively include a removable microdisplay module 32 that plugs into the RKE device 12, thus allowing the device 12 to exploit a variety of display options. For example, as shown in FIG. 3e, the fob device 12 is illustrated including the display module 32 in addition to the existing LCD display 26. Alternatively, as shown in FIGs. 3f and 3g, the fob device 12 may include only the display module 32. And, as shown in FIG. 3h, the removable module 32 may optionally include a microdisplay screen 34 and a magnifying lens assembly 36 that is capable of magnifying the high-resolution display of the screen 34 by at least a factor of approximately ten.

Referring now to FIG. 4a, the control interface 28 of the fob device 12 preferably includes features such as conventional keypad buttons 40, that are similar to those used in present state of the art remote keyless entry devices.

Referring to FIGs. 4b, 4c and 4d, the control interface 28 may also include features that mitigate against unintentional wireless transactions that can occur as a result of inadvertent actions by the user 16. For example, as shown in FIGs. 4b and 4c in side and back views, respectively, one such control feature is a skin conduction interface. The skin conduction interface preferably, but not necessarily, includes two electrodes 46 located on the backside of the fob device 12 that are used for skin conduction sensing. The two electrodes 46 when touched by the user 16 are used as a logic signal to verify that the user 16 intended to initiate a particular action. For example, the user 16 can selectively configure the fob device 12 to only initiate or execute a transaction when the user 16 has grasped the fob device 12 by making physical contact with the two electrodes 46.

Referring specifically to FIG. 4d, the electrical conductivity of the user's skin completes a circuit between the two electrodes 46 so that the a circuit 41 located in the fob device 12 can sense current flow between the two electrodes 46 and can assert an enable signal 49 to an fob microprocessor 47 to allow the transaction. When there is no current flowing between the two electrodes 46 due to the absence of a conductive skin path between the two electrodes 46, the enable signal 49 remains unasserted so that the transaction cannot take place. The circuit 41 preferably, but not necessarily, includes a voltage comparator 43 having a high input impedance, greater than approximately 100 megohms. The circuit 41 also includes three resistors R1, R2 and R3, each of approximately the same value and each of approximately the same order (approximately 10 megohms); a capacitor C; and the electrodes 46, which are preferably located on the back of the fob device 12. The circuit 41 further includes the fob device battery 45 that provides the source for the reference voltage to the plus (+) terminal of the comparator 43 and the microprocessor 47. When no skin conduction path is present, the voltage at the minus (-) terminal of the voltage comparator 43 is pulled up to the battery voltage by the resistor R1. Since the voltage at the plus (+) terminal of the voltage comparator 43 is set at approximately one-half of the battery voltage due to the voltage division implemented by the resistors R2 and R3, the output of the comparator 43 is a logic level 0, representing un-assertion of an enable signal 49 when no conduction path is present between the electrodes 46. When there is an external conduction path between the electrodes 46, for example, as a result of skin conduction, the voltage at the minus (-) terminal of the comparator 43 is near ground since the conduction path has significantly less resistance than the resistor R1. In this case, the output of the comparator 43 is a logic level 1, representing assertion of the enable signal 49. The state of the enable signal 49 is used by software running on the fob device's microprocessor 47 to enable or disable the execution of the transaction. The capacitor C serves the function of eliminating external voltage noise (from RF or power line electric fields in the external environment) at the minus (-) terminal of the comparator 43, that might be falsely be interpreted by the comparator 43, thus creating an unintended logic level 1 as its output.

Referring now to FIGs. 4e and 4f in side and back views, respectively, is an alternate approach to mitigating against unintentional wireless transactions. This approach includes an electrode element 48 (e.g., including two gold-plated copper metal pieces) that is integrated on the backside of the fob device 12 to provide the user 16 with the capability to conduct short-range contact messaging transactions. Here, the long-range wireless data signals (18, 20) are replaced by the electrode element 48. So that by physically passing the electrode element 48 across or holding it nearby a database entry point of a domain system 14, the user is able to transmit access code information directly to the domain system 14. This approach not only avoids unintentional transactions by the user 16, but also avoids the potential problem of third parties gaining access to the user's security code information. And where, for example, several base units 22 are located in close proximity of each other, this approach additionally provides the user 16 means of unambiguously selecting the domain system 14 with which the users 16 desires to transact. Thus, short-range contact messaging capabilities may be provided for financial transactions at bank machines or ATMs so that total electronic communication can be achieved between the user 16 and the banking domain system 14, for electronic tolling at toll booths or credit card swipe stations and for universal access to the databases of a particular domain system 14 where, for example, computer or like passwords are required. It is also important to note that short-range wireless messaging capabilities may similarly be provided in the present invention where, for example, interactive and report back commands update the user 16 on the latest information from the electronic database 31 of a particular domain system 14 as to the status of future transactions.

Still, other features of the control interface 28 may include audio control features, such as those provided by state of the art voice command technology, for example Sensory, Inc. RSC-200/264T series chips for speech recognition and synthesis. Such voice command technology allows the user 16 to provide audio input and response to facilitate a transaction with a particular domain system 14.

Alternatively, as shown in FIGs. 4g and 4h, the control interface 28 may include physical connections between an input/output (I/O) port 51 of the fob device 12 and an input/output (I/O) port 53 of the domain system 14. Such physical connections may be desirable to provide means for writing or reading information to or from the non-volatile memory 30 of the fob device 12 using methods other than wireless links (18, 20) or electrode elements 48 like those described in FIGs. 4e and 4f. The domain system I/O port 53 may be implemented as an electrical data and control port having multiple electrical connections. The I/O 53 would only be operable when a special data sequence, code, or key is presented to it that can be algorithmically verified to correspond to write-only information in the non-volatile memory 30. An advantage of the I/O port interface between the fob device 12 and the domain system 14 is it allows the fob device 12 to be programmed or reprogrammed for situations that include the transfer of ownership of the fob device 12 from one user to another. Here, data is typically removed from the fob device 12 and new data download to the fob device 12.

Before leaving the discussion of the fob device control interface 28, it is important to note that the present invention is not limited to any particular control interface feature, so long as the feature can be integrated as part of the pocket-sized fob device 12 and it facilitates a transaction between the user 16 and the domain system 14.

Thus, in accordance with the teachings of the present invention, the present invention provides significant benefits to both users and administrators of secured domain systems, since the functionality of passwords, magnetic cards, personal identification numbers (PINs), biometrics, and smart cards etc. can be converged into single convenient, handheld device 12 that is similar in form to remote keyless entry (RKE) devices already used by several million automobile owners. The device 12 acts as a digital persona, by allowing a user 16 to have in one's possession, at all times, a gateway to all present and future secure digital domain systems. In other words, the present invention combines reliability, wireless operation, long life and small size with the potential to integrate physical and informational security for use with any and all access and authentication needs of a user.

Obviously, many modifications and variations of the present invention are possible in light of the above teachings. Thus, it is to be understood that, within the scope of the appended claims, the invention may be practiced otherwise than as specifically described above.

## Claims

1. An access communication system comprising:
a plurality of independent secure electronic domain systems, each domain system receiving a request signal and transmitting an authorization signal digitally encoded with an authorization reply in response thereto; and
a single transceiver device, the transceiver device responding to activation by a user whereupon the request signal is digitally encoded with an access code and transmitted by the transceiver device to one of the plurality of independent secure electronic domain systems for access authorization, the transceiver device receiving the authorization signal in response to the request signal, the authorization signal providing the user authorization to conduct a transaction with the one independent secure electronic domain system.

2. An access communication system as recited in claim **1**, wherein the access code is selected from the group consisting of user identification (ID) code, personal identification number (PIN), account number, personal biometric signature, voice identifier, written signature, and mother's maiden name.

3. An access communication system as recited in claim **1**, wherein the access code is assigned one level of a plurality of security access levels.

4. An access communication system as recited in claim **1**, further comprising a detachable biometric sensor device attached to an electrical connector and mechanical socket of the transceiver device, the detachable biometeric sensor device providing the access code.

5. An access communication system as recited in claim **4**, wherein the biometric sensor device comprises an active sensor region for extracting an invariant feature of the user.

6. An access communication system as recited in claim **5**, wherein the invariant feature is selected from the group consisting of fingerprint, voice data, human eye iris data, human eye retinal data, handwritten signature, dynamic handwritten signature force measurement, optical face image, and optical palm image.

7. An access communication system as recited in claim **1**, wherein each independent secure domain system comprises a base unit for performing selective pre-processing and post-processing operations associated with the transaction.

8. An access communication system as recited in claim **7**, wherein the base unit comprises a transceiver element for converting the request signal from a wireless medium to a medium recognized by the independent domain system and converting the authorization signal from the medium recognized by the domain system to the wireless medium recognized by the transceiver device.

9. An access communication system as recited in claim **7**, wherein the base unit further comprises an electronic database; a central processing unit (CPU) connected to the electronic database; and authentication algorithm software contained within the central processing unit, whereupon execution of the authentication algorithm software the electronic database is queried.

10. An access communication system as recited in claim **7**, wherein the base unit further comprises an electronic database; a central processing unit (CPU) connected to the electronic database; and a hardware encryption chip programmed with authentication algorithm software, whereupon execution of the authentication algorithm software the electronic database is queried.

11. An access communication system as recited in claim **7**, wherein each one of the plurality of independent secure domain systems further comprises a service provider for providing the authorization reply for the transaction.

12. An access communication system as recited in claim **11**, wherein the service provider comprises an electronic database; a central processing unit (CPU) connected to the electronic database; and authentication algorithm software contained within the central processing unit, the central processing unit executing the authentication algorithm software to query the electronic database for performing selective encryption and decryption operations.

13. An access communication system as recited in claim **11**, wherein the service provider comprises an electronic database; a central processing unit (CPU) connected to the electronic database; and a hardware encryption chip programmed with authentication algorithm software, whereupon execution of the authentication algorithm software the electronic database is queried for performing selective encryption and decryption operations.

14. An access communication system as recited in claim **11**, wherein the base unit is connected to the service provider using a secure communication link.
